# EUROPÄISCHE PATENTSCHRIFT

(11) **EP 0 677 625 B1**
(45) Veröffentlichungstag und Bekanntmachung des Hinweises auf die Patenterteilung: **02.06.1999**
(21) Anmeldenummer: 95104018.7
(22) Anmeldetag: 18.03.1995
(51) Int. Cl.: E04F 11/18

(54) **Bausatz zur Verbindung von Rohrabschnitten, insbesondere für Treppengeländer und dergleichen**
Building set to join tubes, especially for stair railings and similar
Ensemble d'éléments pour le raccordement des tubes, particulièrement pour balustrades d'escalier et similaires

(30) Priorität: 13.04.1994 DE 9406130 U
(43) Veröffentlichungstag der Anmeldung: 18.10.1995
(73) Patentinhaber: Pauli + Sohn GmbH, D-51545 Waldbröl (DE)
(72) Erfinder: Hornung, Andreas, 59174 Kamen (DE); Schräder, Karl-Heinz, 59174 Kamen (DE)
(74) Vertreter: Niemann, Uwe, Dr.-Ing.

(56) Entgegenhaltungen:
- EP-A- 0 599 757
- FR-A- 2 670 229
- GB-A- 2 269 645
- US-A- 3 982 841

## Beschreibung

Die Erfindung betrifft einen Bausatz zur Verbindung von Rohrabschnitten, insbesondere für Treppengeländer und dergleichen, bestehend aus den Rohrabschnitten und aus Verbindungselementen. - Bei der Montage von Treppengeländern, aber auch bei der Montage anderer Konstruktionen aus Rohrabschnitten, entsteht häufig das Problem, daß benachbarte Rohrabschnitte unter verschiedenen Raumwinkeln miteinander verbunden werden müssen. Das erfordert eine individuelle Anpassung, die sehr aufwendig ist, wenn mit entsprechend gekrümmten Rohrabschnitten oder mit an den jeweiligen Raumwinkel angepaßten Verbindungselementen gearbeitet wird. Nach einem noch nicht zum Stand der Technik gehörenden Vorschlag (DE-Patentanmeldung P 43 36 401.2) werden zweiteilige Verbindungselemente eingesetzt, deren Hälften jeweils einen Steckzapfen zum Einführen in einen Rohrabschnitt sowie eine an den Steckzapfen anschließende Kugelhälfte aufweisen, wobei die Schnittfläche der Kugelhälfte sich über einen Winkel der Achse des Steckzapfens erstreckt und beide Kugelhälften mit einer Befestigungsschraube verbunden werden. Durch gegenseitiges Verdrehen der Hälften kann der Raumwinkel zwischen den beiden Steckzapfen geändert werden. Es können aber nur zwei Rohrabschnitte miteinander verbunden werden.

Ein Bausatz der eingangs beschriebenen Gattung zum geradlinigen Verbinden von Rohrabschnitten ist aus der GB-A-2 269 645 bekannt. Das Verbindungselement weist beidseitig miteinander fluchtende, rohrförmige Steckzapfen auf, auf die Rohrabschnitte aufgesteckt werden. Die Rohrabschnitte werden mit den Steckzapfen verspannt.

Aus der FR-A-2 670 229 ist ein Verbindungselement bekannt, das aus einer Kugel besteht, die wenigstens eine Gewindebohrung aufweist, deren Bohrungsachse sich durch den Kugelmittelpunkt erstreckt. Ein zugeordneter Anschlußzapfen, auf den ein Rohrabschnitt aufsteckbar ist, besitzt eine Bohrung für eine Befestigungsschraube, die in die Gewindebohrung der Kugel eindrehbar ist. Dementsprechend können Rohrabschnitte nur in der Flucht von in der Kugel bereits vorhandenen Gewindebohrungen an die Kugel angesetzt werden. Eine spätere Winkelverstellung der Rohrabschnitte ist nicht möglich.

Aufgabe der Erfindung ist es, einen Bausatz anzugeben, mit dem eine Verstellung über große Raumwinkelbereiche möglich ist und bei dem mehrere Rohrabschnitte miteinander verbunden werden können.

Diese Aufgabe wird dadurch gelöst, daß die Verbindungselemente für miteinander fluchtende Rohrabschnitte aus in die Rohrabschnitte einsteckbaren, axial miteinander verbundenen Steckzapfen bestehen und daß die Verbindungselemente für gegeneinander abgewinkelte Rohrabschnitte aus einem Steckzapfen und einer daran anschließenden Kugel sowie einem auf der Kugeloberfläche verstellbaren und fixierbaren Anschlußzapfen bestehen, daß die Kugel wenigstens eine Gewindebohrung aufweist, deren Bohrungsachse sich durch den Kugelmittelpunkt erstreckt, wobei der Anschlußzapfen kugelseitig eine Ausnehmung mit einer der Kugeloberfläche wenigstens bereichsweise angepaßten Stützfläche sowie eine durchgehende, im Bereich der Ausnehmung mündende Bohrung für eine in die Gewindebohrung eindrehbare Befestigungsschraube aufweist und wobei die Achse dieser Bohrung sich unter einem Winkel zur Achse des Anschlußzapfens und bei an die Kugel angesetztem Anschlußzapfen durch den Kugelmittelpunkt erstreckt. Eine relative Verstellung der Achsen einerseits des Steckzapfens und andererseits des Anschlußzapfens ist möglich durch Drehen des Anschlußzapfens um die Achse der Bohrung bzw. um eine in der Bohrung befindliche und in die Gewindebohrung der Kugel eingedrehte Befestigungsschraube. Ist die gewünschte Einstellung erreicht, wird die Befestigungsschraube angezogen und dadurch die Einstellung fixiert. Die mögliche Verstellung des Winkels zwischen der Achse des Steckzapfens und der Achse des Anschlußzapfens hängt von dem Winkel ab, unter dem die Bohrung des Anschlußzapfens zur Achse des Anschlußzapfens angeordnet ist. Sind größere Raumwinkel zwischen der Achse des Steckzapfens und der Achse des Anschlußzapfens erforderlich, kann die Gewindebohrung der Kugel auch unter einem Winkel zur Achse des Steckzapfens angeordnet werden. Dann kann zusätzlich auch die Kugel mit dem Steckzapfen um die Achse des Steckzapfens gedreht werden, so daß sich ein weiterer Einstellfreiheitsgrad ergibt.

Bei einer anderen Ausführung weist der Anschlußzapfen eine von der Ausnehmung ausgehende Sackbohrung sowie einen sich vom Mittenbereich seiner Stirnfläche bis in den Bereich der Sackbohrung erstreckenden radialen Schlitz auf. Durch Verdrehen des Anschlußzapfens und anschließendes Verschwenken in Richtung der Ebene des radialen Schlitzes, durch den sich Befestigungsschraube erstreckt, ist auch in diesem Fall eine Winkeleinstellung in einem großen Bereich möglich, und zwar ohne daß die Kugel verdreht wird.

Vorzugsweise weist die Ausnehmung des Anschlußzapfens als Stützfläche im Randbereich eine kreisringförmige, der Kugeloberfläche angepaßte Kalottenfläche auf, so daß der Anschlußzapfen in jeder Position auf der Kugel sicher abgestützt ist.

Für die Abstützung des Kopfes der Befestigungsschraube kann die Bohrung rohrseitig eine Einsenkung zur Aufnahme des Kopfes der Befestigungsschraube aufweisen. Die Einsenkung kann sich im Bereich der rohrseitigen Stirnfläche des Anschlußzapfens befinden oder, wenn die Bohrung unter einem größeren Winkel zur Achse des Anschlußzapfens angeordnet ist, auch im Bereich der Mantelfläche des Anschlußzapfens.

Endet die Bohrung des Anschlußzapfens im Bereich seiner Stirnfläche, dann ist eine bevorzugte Ausführung der Erfindung dadurch gekennzeichnet, daß die rohrseitige Stirnfläche des Anschlußzapfens als Oberfläche eines Kugelausschnittes geformt ist, dessen Radius bei an die Kugel angesetztem Anschlußzapfen vom Kugelmittelpunkt ausgeht. Dann kann auf eine Einsenkung verzichtet werden.

Der Steckzapfen und/oder der Anschlußzapfen können einen Anschlagbund für den Rohrabschnitt aufweisen. Aus ästhetischen Gründen sollten die Außendurchmesser der Anschlagbunde dem Außendurchmesser der Rohrabschnitte entsprechen.

Grundsätzlich können an die Kugel des aus Steckzapfen, Kugel und Anschlußzapfen bestehenden Verbindungselementes auch mehrere Anschlußzapfen angesetzt werden, solange ein entsprechender Freiraum für die jeweiligen Stützflächen der Anschlußzapfen vorhanden ist. Das setzt aber voraus, daß die Kugel einen entsprechend großen Durchmesser aufweist, der unter diesen Umständen größer sein muß, als der Durchmesser der miteinander zu verbindenden Rohrabschnitte. Außerdem kann der Raumwinkel zwischen den Rohrabschnitten nicht beliebig klein gemacht werden. Das gelingt aber mit einer Ausführung, bei der der Steckzapfen und/oder der Anschlußzapfen kugelseitig ein vom Anschlagbund ausgehendes, sich in Richtung auf die Kugel konisch verjüngendes Anschlußteil aufweisen, wobei am Anschlußzapfen die Ausnehmung mit der Mündung der Bohrung am freien Ende des Anschlußteils angeordnet sind. Dann kann nicht nur der Kugeldurchmesser kleiner gehalten werden, so daß er insbesondere dem Außendurchmesser der Rohrabschnitte entspricht, sondern es können auch mehr als zwei Rohrabschnitte unter verhältnismäßig kleinen Winkeln miteinander verbunden werden.

Alle insoweit beschriebenen Bauteile sind Drehteile, die auf einfache Weise bearbeitet bzw. hergestellt werden können.

Im folgenden werden in der Zeichnung dargestellte Ausführungsbeispiele der Erfindung erläutert; es zeigen:
- Figur 1: die Draufsicht auf ein Verbindungselement für miteinander fluchtende Rohrabschnitte,
- Figur 2: die Draufsicht auf ein Verbindungselement für gegeneinander abgewinkelte Rohrabschnitte,
- Figur 3: einen Teil des Verbindungselementes nach Figur 2, teilweise geschnitten,
- Figur 4: einen anderen Teil des Gegenstandes nach Figur 2, teilweise geschnitten,
- Figur 5: eine andere Ausführung des Gegenstandes nach Figur 4,
- Figur 6: eine weitere Ausführung des Gegenstandes nach Figur 4,
- Figur 7: eine weitere Ausführung des Gegenstandes nach Figur 4,
- Figur 8: eine Stirnansicht des Gegenstandes nach Figur 7,
- Figur 9: eine andere Ausführung des Gegenstandes nach Figur 2,
- Figur 10: eine andere Ausführung des Gegenstandes nach Figur 4 in Verbindung mit der Ausführung nach Figur 9.

Die in der Zeichnung dargestellten Verbindungselemente bilden einen Bausatz zur Verbindung von nicht dargestellten Rohrabschnitten, aus denen insbesondere Handläufe von Geländern, zum Beispiel Treppengeländern, aber auch andere Konstruktionen, wie zum Beispiel Rahmen oder Gitter hergestellt werden. Bei der dargestellten Ausführung bestehen die Verbindungselemente aus Metall, insbesondere Edelstahl.

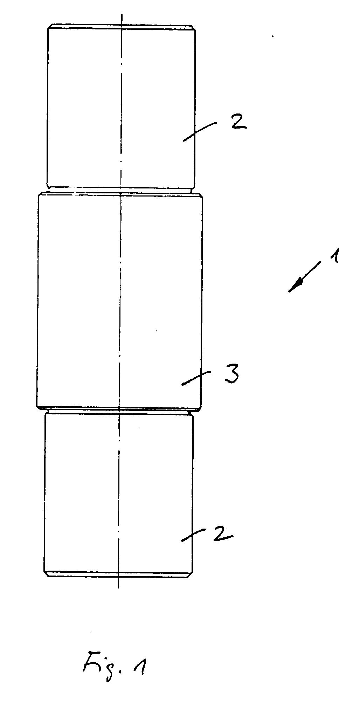

Das in Figur 1 dargestellte Verbindungselement 1 dient zur Verbindung von zwei miteinander fluchtenden Rohrabschnitten. Das Verbindungselement besteht aus zwei axial miteinander fluchtenden Steckzapfen 2, die über einen Anschlagbund 3 miteinander verbunden sind. Die Steckzapfen 2 besitzen Durchmesser, die dem Innendurchmesser der Rohrabschnitte entsprechen und der Anschlagbund 3 besitzt einen Durchmesser, der dem Außendurchmesser der Rohrabschnitte entspricht, so daß nach dem Aufstecken der Rohrabschnitte auf die Steckzapfen ein durchgehender Handlauf entsteht.

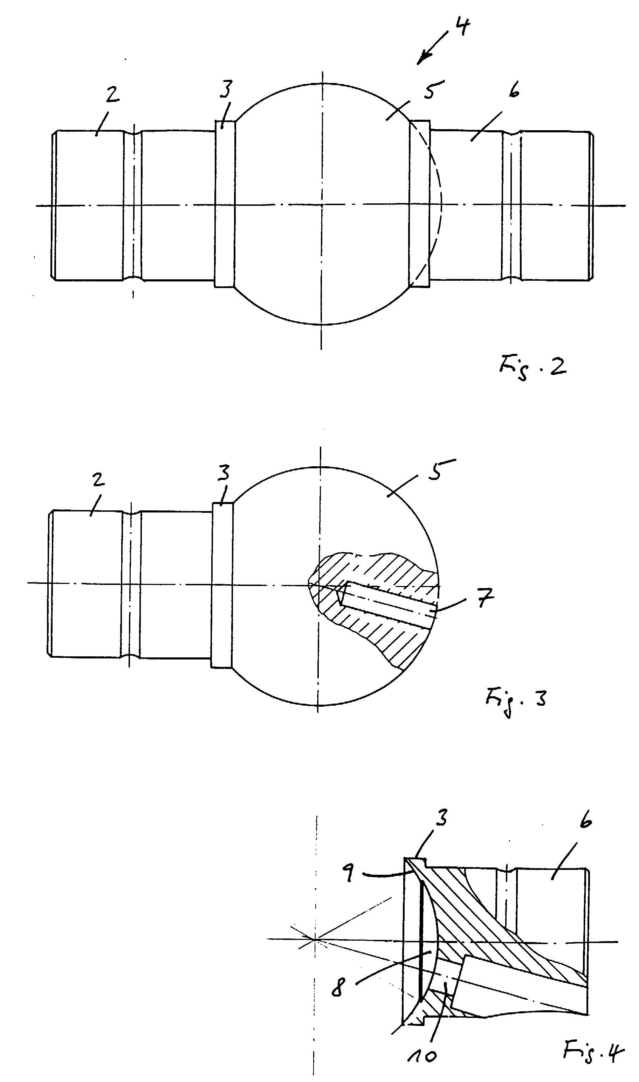

Mit dem in Figur 2 dargestellten Verbindungselement können Rohrabschnitte unter einem einstellbaren Raumwinkel miteinander verbunden werden. Das Verbindungselement 4 besteht aus einem Steckzapfen 2 mit Anschlagbund 3, an den sich eine Kugel 5 anschließt, die mit dem Steckzapfen 2 und dem Anschlagbund 3 ein einheitliches Bauteil bildet. Zum Verbindungselement 4 gehört außerdem ein Anschlußzapfen 6.

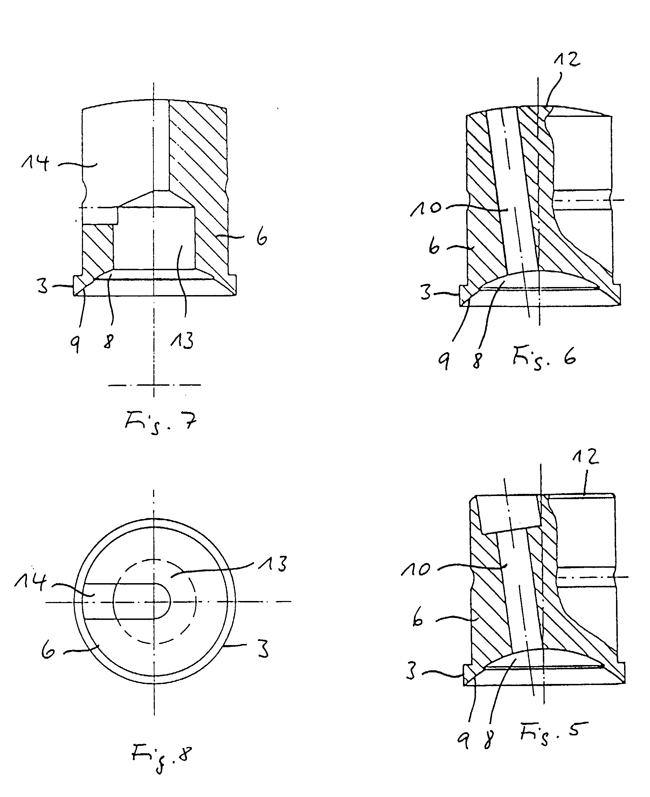

Wie man insbesondere aus Figur 3 entnimmt, weist die Kugel 5 eine Gewindebohrung 7 auf, die unter einem Winkel zur Achse des Steckzapfens 2 angeordnet ist und deren Bohrungsachse sich durch den Kugelmittelpunkt erstreckt.

Der Anschlußzapfen 6 weist endseitig einen Anschlagbund 3 auf und im Bereich des Anschlagbundes 3 eine Ausnehmung 8, die randseitig als eine der Kugeloberfläche angepaßte Kalottenfläche 9 ausgebildet ist. Ferner erstreckt sich durch den Anschlußzapfen 6 eine durchgehende Bohrung 10, die in der Ausnehmung 8 mündet. Die Achse der Bohrung 10 erstreckt sich bei auf die Kugel 5 aufgesetztem Anschlußzapfen durch den Kugelmittelpunkt.

Eine nicht dargestellte Befestigungsschraube wird durch die Bohrung 10 gesteckt und in die Gewindebohrung 7 eingedreht. Bevor die Befestigungsschraube angezogen wird, kann der Raumwinkel zwischen Rohrabschnitten, die einerseits auf den Steckzapfen 2 und andererseits auf den Anschlußzapfen 6 aufgesteckt sind, dadurch verändert werden, daß einerseits die Kugel 5 mit ihrem Steckzapfen 2 um die Achse des Steckzapfens 2 und/oder andererseits der AnschluBzapfen 6 um die Achse der Bohrung 10 bzw. um die darin eingesetzte Befestigungsschraube verdreht werden. Die Befestigungsschraube oder Teile davon bleiben auch nach der Einstellung des Raumwinkels unsichtbar, weil sie entweder durch den Anschlußzapfen 6 oder durch den auf den Anschlußzapfen 6 aufgesteckten Rohrabschnitt verdeckt sind.

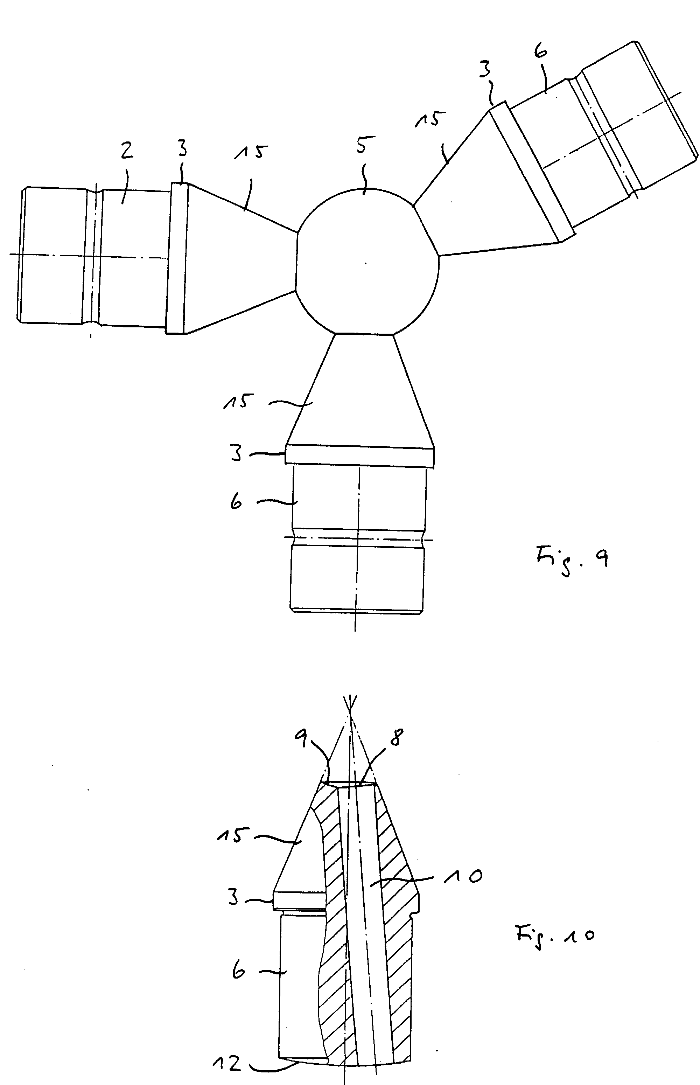

Bei der Ausführung nach Figur 4 ist der Winkel zwischen der Achse der Bohrung 10 und der Achse des Anschlußzapfens 6 so groß, daß eine Einsenkung 11 für den Kopf der Befestigungsschraube die Mantelfläche des Anschlußzapfens 6 schneidet.

Bei der Ausführung nach Figur 5 ist der Winkel zwischen der Achse der Bohrung 10 und der Achse des Anschlußzapfens 6 kleiner, so daß die durchgehende Bohrung 10 im Bereich der rohrseitigen Stirnfläche 12 endet und dort die Einsenkung 11 angeordnet ist.

Eine vorteilhafte Alternative zur Ausführung nach Figur 5 ist in Figur 6 dargestellt, bei der die Stirnfläche 12 als Oberfläche eines Kugelausschnittes geformt ist, dessen Radius bei an die Kugel 5 angesetztem Anschlußzapfen 6 vom Kugelmittelpunkt ausgeht. Dann kann auf eine Einsenkung verzichtet werden, solange die Bohrung 10 im Bereich der Stirnfläche 12 mündet.

Der in den Figuren 7 und 8 dargestellte Anschlußzapfen 6 weist eine von der Ausnehmung 8 ausgehende Sackbohrung 13 mit relativ großem Durchmesser auf sowie einen sich vom Mittenbereich zu einer gewölbten Stirnseite 12 bis in den Bereich der Sackbohrung 13 erstreckenden radialen Schlitz 14. Der Schlitz 14 besitzt eine Schlitzbreite, die mindestens dem Durchmesser der Befestigungsschraube entspricht. Wird die Befestigungsschraube durch den Schlitz 14 und die Sackbohrung 13 gesteckt sowie in eine zugeordnete Gewindebohrung 7 der Kugel 5 gedreht ist, kann dieser Anschlußzapfen 6 verdreht und in der Ebene des Schlitzes 14 auf der Kugeloberfläche verschwenkt werden. Die Kugel 5 braucht dabei nicht verdreht zu werden.

Die in den Figuren 9 und 10 dargestellte Ausführung eignet sich insbesondere für solche Anwendungen, bei denen der Durchmesser der Kugel 5 gleich oder kleiner dem Durchmesser der Rohrabschnitte sein soll und/oder bei denen mehr als zwei Anschlußzapfen 6 mit zugeordneten Rohrabschnitten an die Kugel 5 angesetzt werden sollen. Man erkennt, daß sowohl der Steckzapfen 2 als auch die beiden dargestellten Anschlußzapfen 6 kugelseitig jeweils ein vom Anschlagbund 3 ausgehendes, sich in Richtung auf die Kugel 5 konisch verjüngendes Anschlußteil 15 aufweisen, wobei im Anschlußzapfen 6 die Ausnehmung 8 mit der Mündung der Bohrung 10 am freien Ende des Anschlußteils 15 angeordnet sind (Figur 10). Es versteht sich, daß die Kugel 5 eine entsprechende Anzahl von Gewindebohrungen für sich daran zu befestigende Anschlußzapfen 6 aufweist. Wegen der Konizität der Anschlußteile 15 und der kleinen Stützflächen im Bereich der Ausnehmung 8 an den Anschlußteilen 6 können die Anschlußteile 6 dicht nebeneinander an der Kugel 5 befestigt werden, so daß auch Verbindungen hergestellt werden können, bei denen Rohrabschnitte unter einem sehr kleinen Winkel zueinander angeordnet sind.

## Patentansprüche

1. Bausatz zur Verbindung von Rohrabschnitten, insbesondere für Treppengeländer und dergleichen, bestehend aus den Rohrabschnitten und aus Verbindungselementen (1), die für miteinander fluchtende Rohrabschnitte aus in die Rohrabschnitte einsteckbaren, axial miteinander verbundenen Steckzapfen (2) bestehen, **dadurch gekennzeichnet,** daß die Verbindungselemente (4) für gegeneinander abgewinkelte Rohrabschnitte aus einem Steckzapfen (2) und einer daran anschließenden Kugel (5) sowie einem auf der Kugeloberfläche verstellbaren und fixierbaren Anschlußzapfen (6) bestehen, daß die Kugel (5) wenigstens eine Gewindebohrung (7) aufweist, deren Bohrungsachse sich durch den Kugelmittelpunkt erstreckt, und daß der Anschlußzapfen (6) kugelseitig eine Ausnehmung (8) mit einer der Kugeloberfläche wenigstens bereichsweise angepaßten Stützfläche sowie eine durchgehende, im Bereich der Ausnehmung (8) mündende Bohrung (10) für eine in die Gewindebohrung (7) eindrehbare Befestigungsschraube aufweist, wobei die Achse dieser Bohrung (10) sich unter einem Winkel zur Achse des Anschlußzapfens (6) und bei an die Kugel (5) angesetztem Anschlußzapfen (6) durch den Kugelmittelpunkt erstreckt.

2. Bausatz nach Anspruch 1, **dadurch gekennzeichnet,** daß die Gewindebohrung (7) der Kugel (5) sich unter einem Winkel zur Achse des Steckzapfens (2) erstreckt.

3. Bausatz nach einem der Ansprüche 1 oder 2, **dadurch gekennzeichnet,** daß der Anschlußzapfen (6) eine von der Ausnehmung (8) ausgehende Sackbohrung (13) sowie einen sich vom Mittenbereich seiner Stirnfläche (12) bis in den Bereich der Sackbohrung (13) erstreckenden radialen Schlitz (14) aufweist.

4. Bausatz nach einem der Ansprüche 1 bis 3, **dadurch gekennzeichnet,** daß die Ausnehmung (8) als Stützfläche im Randbereich eine kreisringförmige, der Kugeloberfläche angepaßte Kalottenfläche (9) aufweist.

5. Bausatz nach einem der Ansprüche 1 bis 4, **dadurch gekennzeichnet,** daß die Bohrung (10) rohrseitig eine Einsenkung (11) zur Aufnahme des Kopfes der Befestigungsschraube aufweist.

6. Bausatz nach einem der Ansprüche 1 bis 5, **dadurch gekennzeichnet,** daß die rohrseitige Stirnfläche (12) des Anschlußzapfens (6) als Oberfläche eines Kugelausschnittes geformt ist, dessen Radius bei an die Kugel (5) angesetztem Anschlußzapfen (6) vom Kugelmittelpunkt ausgeht.

7. Bausatz nach einem der Ansprüche 1 bis 6, **dadurch gekennzeichnet**, daß der Steckzapfen (2) und/oder der Anschlußzapfen (6) einen Anschlagbund (3) für den Rohrabschnitt aufweisen.

8. Bausatz nach einem der Ansprüche 1 bis 7, **dadurch gekennzeichnet,** daß der Außendurchmesser der Anschlagbunde (3) dem Außendurchmesser der Rohrabschnitte entspricht.

9. Bausatz nach einem der Ansprüche 1 bis 8, **dadurch gekennzeichnet**, daß der Steckzapfen (2) und/oder der Anschlagzapfen (6) kugelseitig ein vom Anschlagbund (3) ausgehendes, sich in Richtung auf die Kugel (5) konisch verjüngendes Anschlußteil (15) aufweisen, wobei am Anschlußzapfen (6) die Ausnehmung (9) mit der Mündung der Bohrung (10) am freien Ende des Anschlußteils (15) angeordnet ist.

## Claims

1. Construction set for connection of tube lengths, especially for banisters and the like, consisting of the tube lengths and of connecting elements (1), which consist of axially interconnected plug pins (2) for mutually aligned tube lengths, which plug pins are pluggable into the tube lengths, characterised in that the connecting elements (4) for pipe lengths angled relative to one another consist of a plug pin (2) and a ball (5) adjoining thereat as well as a connecting pin (6) which is adjustable and fixable on the ball surface, that the ball (5) has at least one threaded bore (7), the bore axis of which extends through the ball centre point, and that the connecting pin (6) has at the ball end a recess (8) with a support surface, which is matched at least regionally to the ball surface, as well as a bore (10), which goes through and opens in the region of the recess (8), for a fastening screw screwable into the threaded bore, wherein the axis of this bore (10) extends at an angle to the axis of the connecting pin (6) and, when the connecting pin (6) is placed against the ball (5), extends through the ball centre point.

2. Construction set according to claim 1, characterised in that the threaded bore (7) of the ball (5) extends at an angle to the axis of the plug pin (2).

3. Construction set according to one of claims 1 and 2, characterised in that the connecting pin (6) has a blind bore (13) going out from the recess (8) as well as a radial slot (14) extending from the middle region of its end face (2) into the region of the blind bore (13).

4. Construction set according to one of claims 1 to 3, characterised in that the recess (8) has a circularly annular guide surface (9), which is matched to the ball surface, as support surface in the edge region.

5. Construction set according to one of claims 1 to 4, characterised in that the bore (10) has at the tube end a depression (11) for receiving the head of the fastening screw.

6. Construction set according to one of claims 1 to 5, characterised in that the end face (12), which is at the tube end, of the connecting pin (6) is shaped as a surface of a portion of a sphere, the radius of which, when the connecting pin (6) is placed against the ball (5), goes out from the ball centre point.

7. Construction set according to one of claims 1 to 6, characterised in that the plug pin (2) and/or the connecting pin (6) has or have an abutment collar (3) for the pipe length.

8. Construction set according to one of claims 1 to 7, characterised in that the outer diameter of the abutment collar (3) corresponds with the outer diameter of the pipe length.

9. Construction set according to one of claims 1 to 8, characterised in that the plug pin (2) and/or the connecting pin (6) has or have at the ball end a connecting part (15) which goes out from the abutment collar (3) and conically tapers in direction towards the ball (5), wherein at the connecting pin (6) the recess (9) together with the mouth of the bore (10) is arranged at the free end of the connecting part (15).

## Revendications

1. Ensemble d'éléments pour l'assemblage de tronçons de tubes, notamment pour des balustrades d'escaliers et similaires, constitué des tronçons de tubes et d'éléments d'assemblage (1) qui consistent, pour des tronçons de tubes en alignement mutuel, en des tenons d'emboîtement (2) pouvant être emboîtés dans les tronçons de tubes et mutuellement assemblés en direction axiale, **caractérisé** en ce que les éléments d'assemblage (4) pour des tronçons de tubes formant un coude entre eux sont constitués d'un tenon d'emboîtement (2) et d'une boule (5) se raccordant à ce tenon, ainsi que d'un tenon de raccordement (6) pouvant être déplacé et fixé en position sur la surface de la boule, en ce que la boule (5) présente au moins un perçage fileté (7) dont l'axe passe par le centre de la boule, et en ce que le tenon de raccordement (6) présente côté boule un évidement (8) doté d'une face d'appui adaptée au moins pour partie à la surface de la boule, ainsi qu'un perçage traversant (10) débouchant dans la région de l'évidement (8) et destiné à une vis de fixation pouvant être vissée dans le perçage fileté (7), l'axe de ce perçage (10) s'étendant sous un angle par rapport à l'axe du tenon de raccordement (6) et passant par le centre de la boule lorsque le tenon de raccordement (6) est monté sur la boule (5).

2. Ensemble d'éléments selon la revendication 1, **caractérisé** en ce que le perçage fileté (7) de la boule (5) s'étend sous un angle par rapport à l'axe du tenon d'emboîtement (2).

3. Ensemble d'éléments selon la revendication 1 ou 2, **caractérisé** en ce que le tenon de raccordement (6) présente un perçage borgne (13) partant de l'évidement (8), ainsi qu'une fente radiale (14), s'étendant depuis la région médiane de sa face frontale (12) jusque dans la région du perçage borgne (13).

4. Ensemble d'éléments selon une des revendications 1 à 3, **caractérisé** en ce que l'évidement (8) présente comme face d'appui, dans la région de bord, une face concave (9) annulaire, adaptée à la surface de la boule.

5. Ensemble d'éléments selon une des revendications 1 à 4, **caractérisé** en ce que le perçage (10) présente côté tube une creusure (11) pour recevoir la tête de la vis de fixation.

6. Ensemble d'éléments selon une des revendications 1 à 5, **caractérisé** en ce que la face frontale (12) côté tube du tenon de raccordement (6) a la forme de la surface d'un secteur sphérique dont le rayon part du centre de la boule lorsque le tenon de raccordement (6) est monté sur la boule (5).

7. Ensemble d'éléments selon une des revendications 1 à 6, **caractérisé** en ce que le tenon d'emboîtement (2) et/ou le tenon de raccordement (6) présentent un collet de butée (3) pour le tronçon de tube.

8. Ensemble d'éléments selon une des revendications 1 à 7, **caractérisé** en ce que le diamètre extérieur des collets de butée (3) correspond au diamètre extérieur des tronçons de tubes.

9. Ensemble d'éléments selon une des revendications 1 à 8, **caractérisé** en ce que le tenon d'emboîtement (2) et/ou le tenon de raccordement (6) présentent côté boule une partie de raccordement (15) partant du collet de butée (3) et se rétrécissant coniquement en direction de la boule (5), et, sur le tenon de raccordement (6), l'évidement (8) pourvu de l'embouchure du perçage (10) est disposé à l'extrémité libre de la partie de raccordement (15).
